# EUROPEAN PATENT APPLICATION

(11) **EP 2 395 809 A2**
(43) Date of publication of application: **14.12.2011**
(21) Application number: 11005453.3
(22) Date of filing: 23.01.2006
(51) Int. Cl.: H04W 88/02, H04H 60/33

(54) **Transmitter controlled communication links**

(30) Priority: 21.01.2005 US 645021 P; 20.01.2006 US 336362; 20.01.2006 US 336361
(62) Divisional of application: 06719152.8
(71) Applicant: RESPONSIVE INNOVATIONS, LLC, Akro OH 44319 (US)
(72) Inventor: Adkins, Kevin G., Akron, Ohio 44319 (US)
(74) Representative: Kador & Partner

(57) **Abstract**

A wireless communication system is disclosed herein. The wireless communication system may include transmitter units and a receiver. In one embodiment, each transmitter has an address and logic programmed to perform the steps of receiving a user selection and, responsive to the receiving, repeatedly transmitting a wireless selection signal until a wireless acknowledgment signal is received. The wireless selection signal may include the address and the user selection. The receiver may include means to receive a wireless selection signal and logic programmed to transmit a wireless acknowledgment signal in response to the receipt of each wireless selection signal.

## Description

### PRIORITY

This application claims priority to U.S. provisional application Serial No. 60/645,021, filed January 21, 2005; U.S. non-provisional application titled Transmitter Controlled Communication Links, filed January 20, 2006 (serial number not yet assigned); and U.S. non-provisional application titled Wireless Communication System, filed January 20, 2006 (serial number not yet assigned).

### FIELD OF INVENTION

The present application relates to a wireless response system and method. More particularly, the present application relates to a wireless response system having a plurality of transmitters and at least one receiver and a method for using the same.

### BACKGROUND

Audience response systems are employed to retrieve (or receive) responses from a group of individuals at a central location. Such systems may be used in classroom settings, corporate meetings, or in other gatherings of individuals. Wireless audience response systems may include at least one base unit and a plurality of handheld units. Each handheld unit typically includes a keypad for inputting user responses.

In one known embodiment, the base unit controls communication by, for example, polling each handheld unit. If a user has entered a response into the keypad, the response is transmitted to the base unit when the handheld unit is polled. After receipt of the response, the base unit may send an acknowledgment signal.

### BRIEF DESCRIPTION OF DRAWINGS

The accompanying drawings, which are incorporated in and constitute a part of the specification, illustrate various example systems, methods, and so on that illustrate various example embodiments of aspects of the invention. It will be appreciated that the illustrated element boundaries (e.g., boxes, groups of boxes, or other shapes in the figures represent one example of the boundaries. One of ordinary skill in the art will appreciate that one element may be designed as multiple elements or that multiple elements may be designed as one element. An element shown as an internal component of another element may be implemented as an external component and vice versa. The drawings may not be to scale and the proportion of certain elements may be exaggerated for the purpose of illustration.

**Figure 1** is a simplified front plan view of one embodiment of a handheld device for a wireless response system;

**Figure 2** is a simplified front plan view of one embodiment of a receiver for a wireless response system;

**Figure 3** is a simplified schematic drawing of one embodiment of a wireless response system including a handheld device in communication with a receiver;

**Figure 4** is a simplified schematic drawing of one embodiment of a wireless response system including a receiver in communication with a plurality of handheld device;

**Figure 5** is a simplified flow chart of one embodiment of a method for using a handheld device in a wireless response system;

**Figure 6** is a simplified flow chart of one embodiment of a method for using a receiver in a wireless response system;

**Figure 7** is a simplified schematic drawing of RF profiles for a handheld device and a receiver in one embodiment of a wireless response system; and

**Figure 8** is a simplified illustration of one embodiment of an RF signal spread on a selected frequency band.

### DETAILED DESCRIPTION

This application describes a wireless response system and method of use. The system may include at least one handheld device and a base unit. The system may employ a single handheld device or several thousand handheld devices. The handheld device may be capable of transmitting and receiving information. The handheld device may also be referred to as a transmitter device or a handheld user transceiver.

Similarly, although the base unit is referred to as a "receiver," it may be capable of both transmitting and receiving information. The base unit may be referred to as a receiver or a central transceiver.

"Address", as used herein, includes but is not limited to one or more network accessible addresses, device identifiers, electronic identification numbers (such as EINs), IP addresses, url and ftp locations, e-mail addresses, names, a distribution list including one or more addresses, network drive locations, account numbers or other types of addresses that can identify a desired destination or device.

"Computer-readable medium", as used herein, refers to any medium that participates directly or indirectly in providing signals, instructions and/or data to one or more processors for execution. Such a medium may take many forms, including but not limited to, non-volatile media, volatile media, and transmission media. Non-volatile media may include, for example, optical disks, magnetic disks or so-called "memory sticks." Volatile media may include dynamic memory. Transmission media may include coaxial cables, copper wire, and fiber optic cables. Transmission media can also take the form of acoustic or light waves, such as those generated during radio-wave and infra-red data communications, or take the form of one or more groups of signals. Common forms of computer-readable media include, for example, a floppy disk, a flexible disk, hard disk, magnetic tape, or any other magnetic medium, a CD-ROM, any other optical medium, punch cards, papertape, any other physical medium with patterns of holes, a RAM, a PROM, an EPROM, a FLASH-EPROM, any other memory chip or cartridge, a carrier wave/pulse, or any other medium from which a computer, a processor or other electronic device can read.

"Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit (ASIC), a programmed logic device, memory device containing instructions, or the like. Logic may also be fully embodied as software.

"Signal", as used herein, includes but is not limited to one or more electrical or optical signals, analog or digital signals, one or more computer or processor instructions, messages, a bit or bit stream, or other means that can be received, transmitted, and/or detected.

"Software", as used herein, includes but is not limited to one or more computer readable and/or executable instructions that cause a computer or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, instructions stored in a memory, part of an operating system or other type of executable instructions. It will be appreciated by one of ordinary skill in the art that the form of software is dependent on, for example, requirements of a desired application, the environment it runs on, and/or the desires of a designer/programmer or the like.

"User", as used herein, includes but is not limited to one or more persons, software, computers or other devices, or combinations of these.

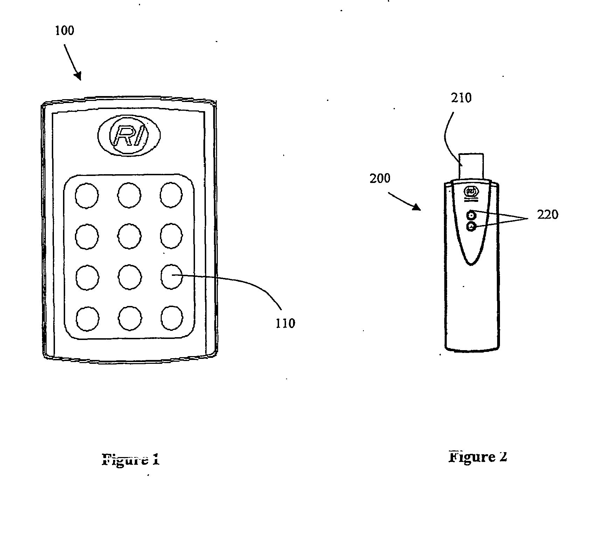

Figure 1 illustrates a front plan view of one embodiment of a handheld device 100 for a wireless response system. In the illustrated embodiment, the handheld device 100 may include a plurality of buttons 110 configured to accept a user input. In alternative embodiments, the handheld device may employ switches, dials, an LCD touch screen, a graphical user interface, or any other known interface configured to accept a user input.

In one embodiment, the handheld device 100 has a length of less than 5 inches, a width of less than 4 inches, and a height of less than 0.75 inches. In an alternative embodiment, the handheld device has a length of 3.3 inches, a width of 2.1 inches, and height of 0.3 inches. In other alternative embodiments, the handheld device may be larger or smaller.

In one embodiment, the handheld device **100** is battery operated. The battery may be a removable battery, such as a AA or AAA size battery or a watch battery. In one embodiment, the handheld device 100 receives operative power from two (2) 3.0V batteries (not shown). Exemplary batteries include, without limitation, CR2032 coin cell lithium batteries, CR2320 coin cell lithium batteries, or CR 1025 coin cell lithium batteries. In one embodiment, the batteries have a diameter of less than 1.25 inches and a height of less than 0.25 inches. In another embodiment, the batteries have a diameter of approximately 0.8 inches and a height of approximately 0.125 inches. When such batteries are used with one of the above described embodiments of the handheld device **100**, the handheld device 100 has a length that is less than 5 times the diameter of one battery, a width that is less than 3 times the diameter of one battery, and a height that is less than 3 times the height of one battery. In one embodiment, two batteries may be stacked, one on top of the other. In another embodiment, the batteries may be placed side by side.

**Figure 2** illustrates a front plan view of one embodiment of a receiver **200** for a wireless response system. In the illustrated embodiment, the receiver **200** may include a connector **210** configured to be connected to a USB port of a computer. In alternative embodiments, the receiver may include a connector configured to be connected to a firewire or iLink port, a serial port, or any other known type of computer port In another alternative embodiment, the receiver may wirelessly communicate with a computer via an infrared or RF transmitter. In yet another alternative embodiment, the receiver does not directly connect to a computer.

With continued reference to **Figure 2****,** the receiver **200** may include at least one LED **220.** The LED **220** may be configured to indicate on/off status and transmission status. In alternative embodiments, the receiver may employ a dial, an LCD screen, or other known indicators. In another alternative embodiment, the receiver does not include any indicators.

In one embodiment, the receiver **200** has a length of less than 6 inches, a width of less than 2.5 inches, and a height of less than 1 inch. In an alternative embodiment, the receiver **200** has a length of 3.7 inches, a width of 1.1 inches, and a height of 0.4 inches. In other alternative embodiments, the receiver may be larger or smaller.

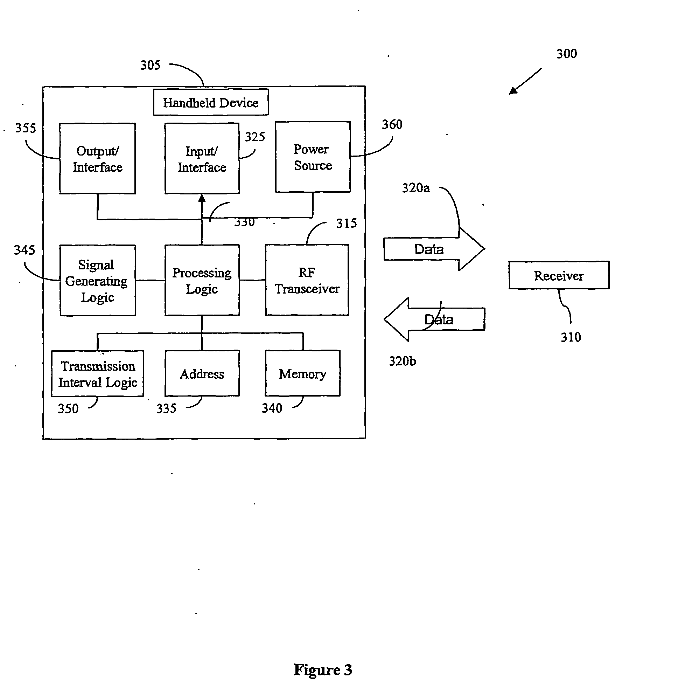

**Figure 3** illustrates one embodiment of a wireless response system 300. In the illustrated embodiment, the system **300** includes at least one handheld device 305 and at least one receiver **310.** The handheld device **305** includes a wireless data transmitter illustrated as a radio frequency (RF) transceiver **315** configured to transmit RF signals as shown at **320a** and receive RF signals as shown at **320b.** In one embodiment, the RF transceiver **315** may be configured as model RRRF-01, commercially available from Responsive Innovations, LLC. In an alternative embodiment (not shown), the handheld device may include an RF transmitter, but not a receiver or a transceiver. In another alternative embodiment (not shown), the handheld device may include an infrared (IR) source configured to transmit data and/or an IR sensor configured to receive data.

In one embodiment, the transceiver **315** transmits RF signals and receives RF signals on the same frequency or channel, or on the same band of frequencies or channels. In another embodiment, the transceiver **315** transmits RF signals at a first frequency (or first band of frequencies) and receives RF signals at a second frequency (or second band of frequencies).

As shown in **Figure 3**, the handheld device **305** includes an input interface 325. Exemplary input interfaces include a keypad, an LCD touchpad, dials, toggle switches, levers, knobs, buttons, or any other appropriate control or input mechanisms.

In one embodiment, the transceiver **315** may transmit and receive RF transmissions on one of a plurality of different frequencies. The user may select the frequency through the input interface **325**. In this manner, the user may select a frequency that has little or no local RF activity to avoid interference. In one embodiment, the user may select a frequency from **82** different frequencies. In an alternative embodiment, the user may select from more or fewer frequencies.

The input interface **325** is in communication with processing logic **330**. When a user inputs a selection into the input interface **325**, the user selection may be communicated to the processing logic **330**. The processing logic **330** may then generate and format a signal for transmission. In one embodiment, the signal may include a stored address **335**, and the user selection. The address **335** may be a number, a sequence of alphanumeric characters, a sequence of ASCII characters, and the like. In one embodiment, the address **335** is permanently assigned to a handheld device **305** and stored in a computer-readable medium, such as a memory **340**.

In an alternative embodiment (not shown), an address may be generated upon the occurrence of a predetermined event. For example, the processing logic **330** or other logic may randomly generate an address **335** each time a user inputs a selection or after a predetermined number of selections. In another embodiment, the receiver **310** may assign an address to each handheld device 305, or the user may enter an identifier.

With continued reference to **Figure 3**, the processing logic **330** is shown to be in communication with signal generating logic **345**. After the processing logic retrieves the address **335**, the processing logic **330** sends the user selection and the address **335** to the signal generating logic **345**. The signal generating logic **345** may generate an RF signal that encodes the user selection and the address. In an alternative embodiment (not shown), the processing logic **330** may perform the step of generating an RF signal.

The processing logic **330** may also be in communication with the RF transceiver **315**. After the RF signal is generated, the processing logic **330** instructs the RF transceiver **315** to transmit the RF signal as shown at **320a**. The RF signal may also be referred to as a wireless selection signal. In one embodiment, the RF signal is transmitted until an acknowledgment signal is received or for a predetermined amount of time.

As illustrated in **Figure 3**, the processing logic **330** may be in communication with a transmission interval logic **350**. The transmission interval logic **350** generates a transmission interval. The transmission interval is an amount of time or clock cycles that elapse between transmission attempts of the RF signal. In one embodiment, the transmission interval is generated on the order of microseconds. In alternative embodiments, the transmission interval is generated on the order of seconds, milliseconds, nanoseconds, picoseconds, femtoseconds, attoseconds, or any other known measurement of time. The transmission interval can be optimized by a number of factors, such as: the number of handheld devices, the number of receivers, the number of users, the frequency of which questions are asked by a moderator, the frequency of the RF signal, the amount of data being transmitted, and the type of data being transmitted.

In one embodiment, the transmission interval logic **350** generates a transmission interval by generating a random number. In another embodiment, the transmission interval is calculated according to a mathematical function. For example, the transmission interval may be calculated by multiplying the address **335** by programmed constant or by a random number. In another embodiment (not shown), the transmission interval may be generated by the processing logic 330. In yet another alternative embodiment (not shown), a unique transmission interval may be a fixed, predetermined number and stored in memory **340**.

In another alternative embodiment, the time interval may vary with each retransmission of a selection. For example, the time interval may become progressively longer after each retransmission. In one embodiment, the transmission interval may be calculated according to the formula tₙ = r + n(ε), where tₙ is the time interval for the n^{th} iteration, r is a random number that is either predetermined or generated with each user selection, n is the number of current iterations, and ε is a small number relative to r. In this embodiment, for example, the transmission interval after the first transmission may be 5ms, the transmission interval after the first retransmission may be 5ms + 100µs, the transmission interval after the second retransmission may be 5ms + 200µs, etc.

The handheld device **305** transmits the RF signal at a user selected frequency or at a default frequency, according to the transmission interval. In other words, the RF transceiver **315** transmits the RF signal, then pauses for a length of time equal to the transmission interval, then repeats the transmission. This process may be repeated for a predetermined number of transmissions, a predetermined length of time, or until an acknowledgment signal is received. In one embodiment, the process repeats until the first occurrence of: (a) the receipt of an acknowledgment signal or (b) eight (8) seconds elapse after the first RF transmission. In an alternative embodiment, the predetermined length of time may be five (5) seconds. In another alternative embodiment, there is no predetermined length of time for terminating the transmission. In yet another alternative embodiment, the predetermined length of time may be programmable by a user.

The transmission interval may serve several functions. For example, using a transmission interval may conserve power, because sending a transmission intermittently may use less power than sending a continuous transmission. Further, when a single receiver **310** is receiving RF signals from a plurality of handheld devices 305, the use of different transmission intervals staggers the RF signals, such that they will arrive at the receiver **310** at different times. Additionally, some known transceivers may not be capable of simultaneous or near simultaneous receiving and transmitting of an RF signal. If such a transceiver is employed, the transmission interval allows the RF transceiver **315** to receive an acknowledgement signal at a time when it is not transmitting an RF signal.

With continued reference to **Figure 3**, the handheld device also includes an output interface **355**. In one embodiment, the output interface **355** indicates operating status to a user such as: that a signal is being transmitted, that an acknowledgment has been received, that user entry has been confirmed, and the like. In such an embodiment, one or more LEDs, an LCD, or other display may serve as an output interface **355**.

In one exemplary embodiment (not shown), the handheld device **305** employs a three color LED arrangement selected for the low power requirements of LED technology. In this embodiment, the LED flashes a first color (such as amber) to indicate that the handheld device **305** is transmitting an RF signal. The LED emits a solid (i.e., non-flashing) second color (such as green) to indicate that an acknowledgement signal has been received and the data has been accepted by the receiver **310**. The LED emits a solid third color (such as red) to indicate that no acknowledgement signal has been received and the transmission has been terminated unsuccessfully. In an alternative embodiment, the handheld device **305** may employ a fourth LED display to indicate that an acknowledgment signal is received, but the user selection was not accepted by the receiver **310**.

In another embodiment, the output interface **355** may include an LCD. A first display message indicates that the handheld device **305** is transmitting a signal, a second display message indicates that an acknowledgment has been received, and a third display message indicates that no acknowledgment has been received and the transmission has been terminated. Additionally, the LCD screen may display the user selection along with the transmission status.

In one embodiment, the handheld device **305** includes a power source **360,** such as a battery. The power source **360** may be a removable battery, such as a AA or AAA size battery or a watch battery, which can be replaced when the power runs low. In one embodiment, the power source **360** includes two (2) 3.0V batteries. Exemplary batteries include, without limitation, CR2032 coin cell lithium batteries, CR2320 coin cell lithium batteries, or CR 1025 coin cell lithium batteries.

In one embodiment, the handheld device **305** can transmit an RF signal when supplied with a current of 10.5mA and can receive an RF signal when supplied with a current of 19mA. In other embodiments, the handheld device can transmit an RF signal when supplied with a current of less than 15mA and can receive an RF signal when supplied with a current of less than 25mA.

Alternatively, the power source **360** may be more permanently fixed within the handheld device **305** and the handheld device **305** may be plugged into an external power source to recharge the power source **360.** In another embodiment (not shown), the handheld device may alternatively be configured to be plugged into an external power source or employ photovoltaic panels.

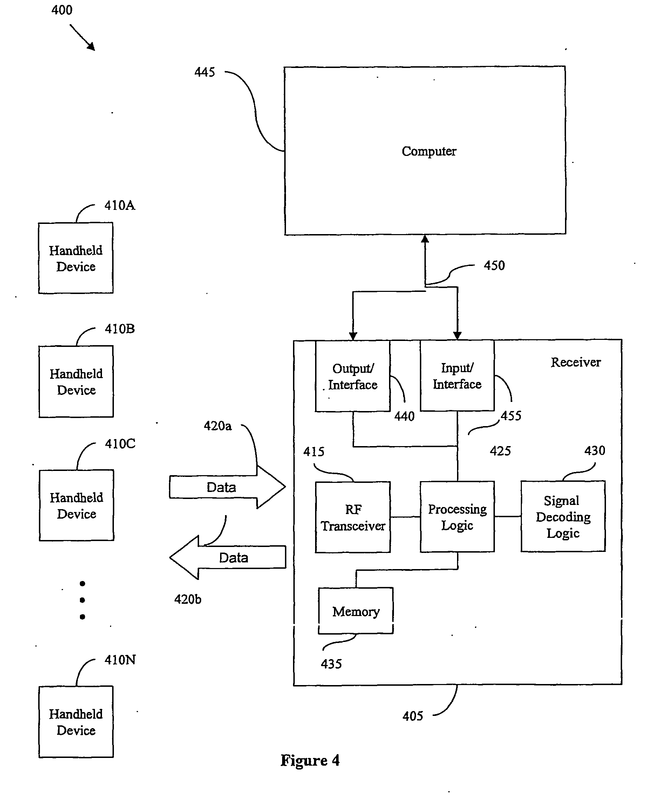

**Figure 4** illustrates a simplified schematic drawing of one embodiment of a wireless response system **400,** having a receiver **405** in communication with a plurality of handheld devices **410A-N.** The handheld devices **410A-N** may be substantially similar to the handheld device **305** illustrated in **Figure 3****.** It should be understood that the receiver **405** may be in data communication with a single handheld device or many handheld devices.

As shown in **Figure 4**, the receiver **405** includes an RF transceiver **415** configured to receive an RF signal as shown at **420a** and send an RF signal as shown at **420b.** In an alternative embodiment (not shown), the receiver may include an RF receiver, but not a transmitter or a transceiver. In another alternative embodiment (not shown), the receiver may include an infrared (IR) sensor configured to receive data and/or an IR source configured to transmit data.

The receiver **405** further includes processing logic **425** in data communication with signal decoding logic **430**. In this embodiment, when a signal is received by the RF transceiver, it is communicated to the processing logic **425.** The processing logic may instruct the signal decoding logic **430** to decode and parse the signal. The signal decoding logic **430** decodes the signal and parses the signal into components including a user selection and an address. In an alternative embodiment (not shown), the processing logic **425** may decode and parse the signal.

In one embodiment (not shown), the receiver may have an ID. The processing logic may be configured to only accept signals that contain the receiver ID, thus ensuring that any collected data is not skewed by spurious signals. In one embodiment, a replacement receiver may have the same ID as a first receiver. In such an embodiment, the replacement receiver would accept signals from the handheld devices, without the need for reprogramming the handheld devices. In another embodiment, all manufactured receivers may have the same ID.

After the signal has been successfully decoded and parsed, the processing logic **425** may generate an acknowledgment signal that contains, for example, the address and an acknowledgment indicator. The acknowledgment signal may also include an indication of whether the user selection was accepted. The processing logic **425** may also instruct the RF transceiver **415** to communicate the acknowledgment signal over communication link **420b.**

With continued reference to **Figure 4**, the receiver **405** also includes a computer-readable medium such as a memory **435**, configured, for example, as RAM, EEPROM, or other types of writable memory. In one embodiment, the user selection and/or the address are stored in the memory **435** after the signal has been decoded and parsed by the signal decoding logic **430**. The storing of the user selection and/or the address may occur before, after, or concurrently with the transmission of the acknowledgment signal. In an alternative embodiment (not shown), the receiver does not have a writable memory and the user selection and unique identifier are instead only communicated to an external computer.

As further shown in **Figure 4**, the receiver **405** includes an output interface **440**. In the illustrated embodiment the output interface **440** is an interface for a computer **445**. The computer **445** may be a PC, a laptop, a graphing calculator, or any other type of computer. The output interface **440** is in communication with the computer **445** via a hardwire connection **450**. The hardwire connection **450** may connect to a USB port, a serial port, a firewire or iLink port, or any other type of port. In an alternative embodiment (not shown), the output interface **440** is in communication with the computer **445** via a wireless connection.

In the illustrated embodiment, the receiver **405** further includes an input interface **455.** In an alternative embodiment (not shown), the receiver includes a single interface for both input and output. The receiver **405** may receive instructions from the computer **445** through the input interface **455**, such as instructions to wipe the memory **435**. In one embodiment, the input interface **455** receives power from the computer **445** through the connection **450**. In an alternative embodiment (not shown), the receiver **405** may include an internal power source, such as a battery or external power means.

In an alternative embodiment (not shown), the receiver is not connected to an external computer. Instead, the output interface **440** is a display, such as an LCD display. In such an embodiment, the user selection and/or the address may be displayed on the output interface **440**. In another alternative embodiment (not shown), the handheld device is not in communication with a computer during the communication of RF signals. Instead, data may be stored in the memory **435** and transferred to a computer **445** at a later time.

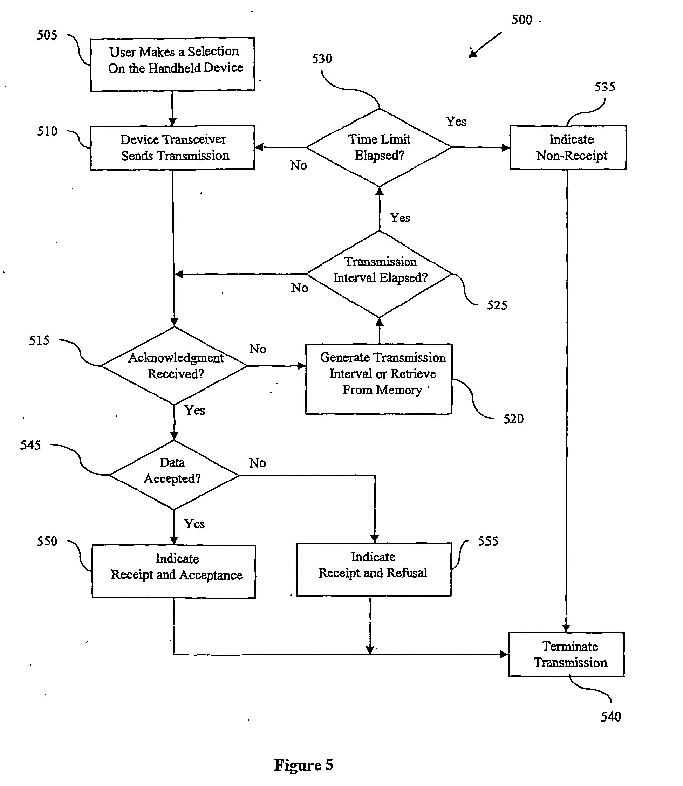

**Figure 5** illustrates a flow chart diagram for an exemplary method **500** for using a handheld device in a wireless communication system. The user makes a selection, step **505**, by selecting a button, turning a dial, etc. on the handheld device. After the user has made a selection, the handheld device communicates a signal that includes the user selection and an address, step **510**.

The handheld device then waits for an acknowledgment signal, step **515**. If an acknowledgment signal is not received, the handheld device generates or retrieves from memory a transmission interval, step **520**, for example, as described above in reference to **Figure 3**. The handheld device then determines whether the transmission interval has elapsed, step **525**. If the transmission interval has not elapsed, the handheld device continues to wait for an acknowledgment signal, step **515**. If the transmission interval has elapsed, then the handheld device determines whether a predetermined transmission time limit has elapsed, step **530**. If the predetermined transmission time limit has elapsed, the handheld device indicates that no acknowledgment was received, step **535**, and the handheld device terminates transmission, step **540**. If the predetermined transmission time limit has not elapsed, the handheld device re-transmits the signal, step **510**. The handheld device then waits again for an acknowledgment signal, step **515**.

Once the handheld device receives an acknowledgment signal, step **515**, it determines whether the acknowledgment signal indicates that the data was accepted, step **545**. If the data was accepted, the handheld device indicates receipt and acceptance, step **550**, and terminates transmission, step **540**. If the data was not accepted, the handheld device indicates receipt and non-acceptance, step **555**, and terminates transmission.

In one embodiment, the handheld device transmits an RF signal and receives an acknowledgment RF signal at the same frequency, or on the same frequency band. In another embodiment (not shown), the handheld device transmits an RF signal at a first frequency (or first frequency band) and receives an acknowledgment RF signal at a second frequency (or second frequency band) different from the first frequency (or first frequency band). In such an embodiment, the handheld device may transmit and receive signals concurrently.

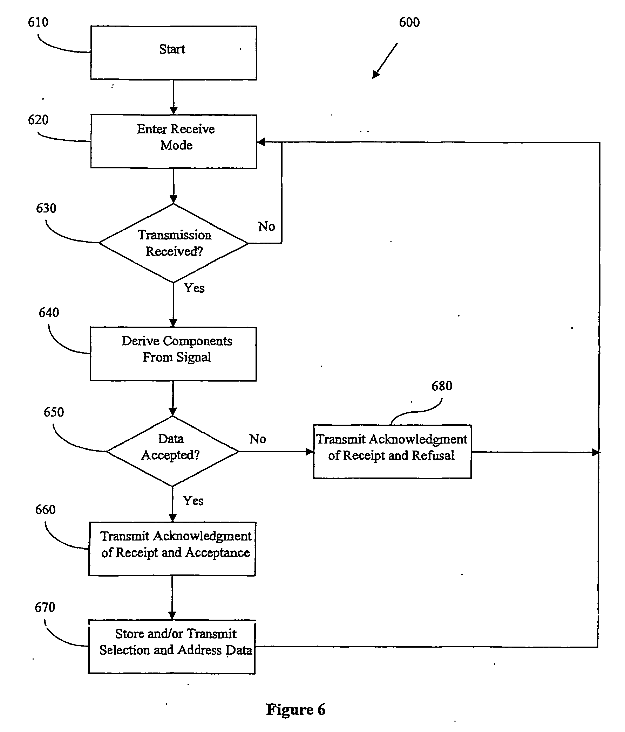

**Figure 6** illustrates a flow chart diagram for an exemplary method **600** for using a receiver in a wireless communication system. The receiver is first powered on, step **610**, and enters a receive mode, step **620**. In one embodiment, the receiver is powered on merely by plugging it into a USB port of a computer. While the receiver is in receive mode, it waits to receive a signal on a communication link, step **630.** If no signal is received, the receiver remains in receive mode, step **620.** Once a signal is received, the receiver may derive components from the signal such as user selected data or address data, step **640.**

After the data has been derived, the receiver determines whether some or all of the data can be accepted, step **650.** If the data is accepted, the receiver transmits an acknowledgment of receipt and acceptance, step **660,** and the data is stored in the receiver's memory and/or transmitted to an external processor, step **670.** The receiver then returns to receive mode, step **620.** In another embodiment (not shown), step **670** may be performed before or concurrently with step **660.** If the data is determined to be unacceptable, step **650,** the receiver may transmit an acknowledgment of receipt and non-acceptance of data, step **680.** The receiver then returns to receive mode, step **620.**

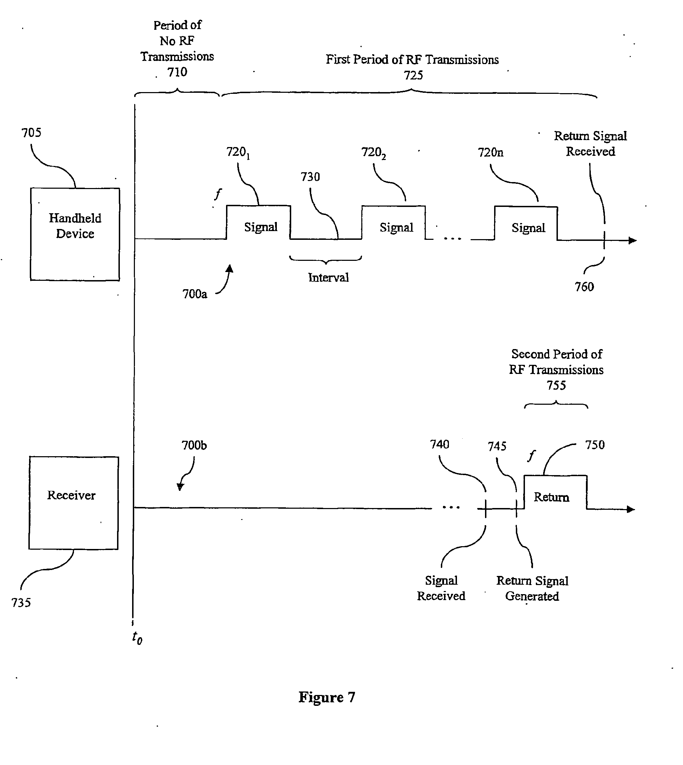

**Figure 7** illustrates a simplified schematic drawing of RF profiles **700a** of a handheld device **705** in one embodiment of a wireless response system. In alternative embodiments, a plurality of handheld devices are employed. In the illustrated embodiment, the handheld device **705** makes no transmission until it receives a selection from a user. Thus, in RF profile **700a,** there is a distinct period of no RF transmission **710.** Upon a user entering a selection, the handheld device **705** transmits a first RF signal 720₁ at a frequency *f*, thus initiating a first period of RF transmissions **725.** The first RF signal **720₁** includes a user selection and an address, such as a unique address. In one embodiment, the first RF signal **720₁** lasts for a duration of 100µs. The duration is a function of the amount and type of data and the frequency *f*.

After the handheld device **705** transmits the first RF signal **720₁,** the RF profile **700a** includes no RF signals for a period equal to a transmission interval **730.** The transmission interval **730** may be generated or retrieved from memory, for example, as explained above in reference to **Figure 3****.** In one embodiment, the transmission interval lasts for a duration of 5ms. After the transmission interval **730,** the RF profile **700a** includes additional RF signals 720₂₋ₙ. Each RF signal 720₂₋ₙ is identical to the first RF signal **720₁,** and is followed by a transmission interval **730.** Thus, in one embodiment, during the first period of RF transmissions **710,** there is a transmission frequency of one transmission every 5ms. In another embodiment, the transmission interval **730** is variable. For example, the transmission interval **730** may be 5ms after the first RF signal **720₁,** then 5ms + 100µs after the second RF signal 720₂, ... and 5ms + ((n-1) * 100)µs after the n^{th} RF signal 720ₙ.

**Figure 7** further illustrates an RF profile **700b** of a receiver **735** in one embodiment of a wireless response system. During the first period of RF transmissions described above, the receiver **735** receives one of the RF signals 720₁₋ₙ transmitted by the handheld device **705,** as shown at **740.** The receiver **735** makes no transmission until it receives an RF signal.

Upon receipt of an RF signal at **740,** the receiver **735** may identify user selection data and address data in the RF signal and determine whether to accept the user selection data. The receiver **735** then generates return data that includes the address data, as shown at **745.** The receiver **735** communicates return data as at least one RF return signal **750** at the frequency f, thus initiating a second period of RF transmissions **755** that overlaps with the first period of RF transmissions **710.** In one embodiment, the return signal **750** lasts for a duration of 100µs.

The receiver **735** transmits a predetermined number of return signals **750** then terminates the second period of RF transmissions **755.** In the illustrated embodiment, the receiver **735** transmits a single return signal **750.** In another embodiment (not shown), the receiver transmits multiple return signals, wherein each return signal is followed by a predetermined transmission interval or a randomly generated time interval.

Upon receipt of the return signal **750,** as shown at **760,** the handheld device **705** terminates the first period of RF transmissions **710.** Alternatively, if no return signal is received, the handheld device **705** may automatically terminate the first period of RF transmissions **710** after a predetermined time elapses. In one embodiment, the predetermined time limit is eight (8) seconds. In this embodiment, the first period of RF transmissions **710** has a duration of 100 microseconds to eight (8) seconds.

After the first and second periods of RF transmissions **725,755** are terminated, another distinct period of no RF transmissions follows. In an alternative embodiment (not shown), the handheld device **710** may transmit an RF signal at a first frequency and the receiver **740** may transmit an acknowledgment signal at a second frequency.

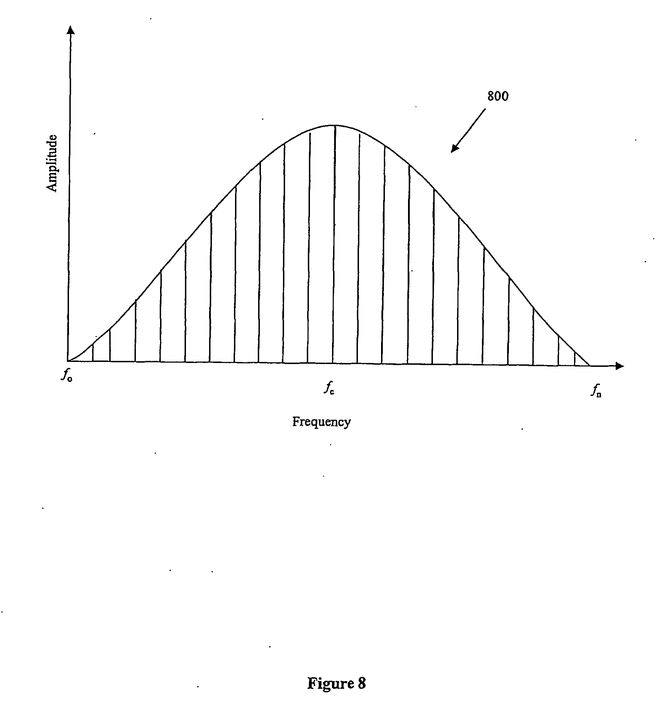

**Figure 8** illustrates one embodiment of an RF signal spread **800** on a selected frequency band. In this embodiment, the RF signal spread **800** covers a range of frequencies from *ƒ*ₒ to *ƒ*ₙ. When a handheld device or a receiver transmits on a selected frequency band, a signal is transmitted that may be centered on a frequency *ƒ*_{c} while spread over *ƒ*ₒ to *ƒ*ₙ. The signal is strongest, and therefore has the highest amplitude, on frequency *ƒ*_{c} at the center of the frequency band. The signal amplitude decreases at frequencies further from *ƒ*_{c}, as shown in the illustrated embodiment. Both a handheld device and a receiver may transmit signals over this illustrated RF signal spread, or the handheld device and the receiver may transmit signals centered on different frequencies.

While the present application has been illustrated by the description of embodiments thereof, and while the embodiments have been described in some detail, it is not the intention of the applicants to restrict or in any way limit the scope of the appended claims to such detail. Additional advantages and modifications will readily appear to those skilled in the art. Therefore, the application, in its broader aspects, is not limited to the specific details, the representative apparatus, on the illustrative embodiments shown and described. Accordingly, departures may be made from such details without departing from the spirit or scope of the applicant's general inventive concept.
In the following clauses, preferred embodiments of the invention are described:
1. An audience response system comprising:
   a plurality of transmitter units, each transmitter unit having a unique address and logic programmed to perform the steps of receiving a user selection via a button push and, responsive to the button push, repeatedly transmitting a wireless selection signal until a wireless acknowledgment signal is received, the wireless selection signal including the unique address and the user selection; and
   a receiver unit having means for receiving a wireless selection signal and logic programmed to transmit a wireless acknowledgment signal in response to the receipt of each wireless selection signal.
2. The system of clause 1, wherein the logic of each transmitter unit is further programmed to generate a transmission interval, wherein the wireless selection signal is repeatedly transmitted according to the transmission interval.
3. The system of clause 2, wherein the logic of each transmitter unit is further programmed to generate a new transmission interval upon receipt of a user selection.
4. The system of clause 2, wherein the transmission interval is a random number.
5. The system of clause 1, wherein each transmitter unit includes a keypad.
6. The system of clause 1, wherein the logic of the receiver unit is further programmed to store each user selection.
7. The system of clause 1, wherein the logic of the receiver unit is further programmed to transmit each user selection to an external processor.
8. The system of clause 1, wherein the logic of the receiver unit is further programmed to make no transmission until a signal is received from a transmitter unit.
9. The system of clause 1, wherein the wireless signal is a radio frequency signal.
10. A method for wirelessly communicating data from a plurality of transmitter units to a receiver, the method comprising the steps of:
   identifying a user input;
   formatting a radio frequency signal comprising the user input and a unique identifier;
   responsive to the identifying, repeatedly wirelessly transmitting the radio frequency signal;
   wirelessly receiving an acknowledgment radio frequency signal comprising the unique identifier; and
   terminating the repeatedly wirelessly transmitting.
11. The method of clause 10, wherein the terminating occurs upon receiving the acknowledgement radio frequency signal.
12. The method of clause 10, wherein the step of terminating transmission of the wireless signal occurs after a predetermined interval.
13. The method of clause 10, further comprising a step of generating a transmission interval.
14. The method of clause 13, wherein the step of repeatedly transmitting a wireless signal is performed according to the generated transmission interval.
15. The method of clause 10, further comprising a step of transmitting the selection to a processor after receipt of the wireless signal.
16. The method of clause 10, wherein the radio frequency signal and the acknowledgment radio frequency signal have the same frequency.
17. The method of clause 10, wherein the radio frequency signal and the acknowledgment radio frequency signal have different frequencies.
18. A method for wirelessly receiving a data from a plurality of transmitters, the method comprising:
   initiating a start up sequence;
   entering a receive mode;
   remaining in the receive mode until a selection signal is wirelessly received;
   upon receiving the signal, parsing the signal into address data and selection data;
   generating an acknowledgment signal including acknowledgment data and the address data; and
   wirelessly transmitting the acknowledgment signal.
19. The method of clause 18, further comprising repeating the steps of:
   entering a receive mode;
   remaining in the receive mode until a selection signal is wirelessly received;
   upon receiving the signal, parsing the signal into address data and selection data;
   generating an acknowledgment signal including acknowledgment data and the address data; and
   wirelessly transmitting the acknowledgment signal.
20. The method of clause 18, further comprising storing the selection data.
21. The method of clause 18, further comprising displaying the selection data.
22. The method of clause 18, further comprising transmitting the selection data to an external processor.
23. A wireless communication system comprising:
   a plurality of handheld devices, each handheld device including:
      a transmitter,
      a computer-readable medium configured to store an address,
      an input selection control, and
      a processor configured to receive a user selection from the input selection control; and, upon receipt of the user selection, communicate instructions to the transmitter to transmit an RF signal encoding the address and the user selection according to a defined RF profile; and
   a receiver device including:
      a transceiver,
      a computer-readable medium, and
      a processor configured to decode the RF signal into the address and the user selection following receipt by the transceiver, store the user selection in the computer-readable medium, generate an acknowledgment including a representation of the address, and communicate instructions to the transceiver to transmit the acknowledgement according to the defined RF profile.
24. The system of clause 23, wherein the defined RF profile includes a transmission interval separating periodic retransmissions of the RF signal.
25. The system of clause 23, wherein the defined RF profile comprises:
   a distinct period of no RF transmission; and
   a first period of RF transmission corresponding to transmission of the RF signal, where the first period of RF transmission occurs after the distinct period of no RF transmission and is responsive to receipt of the user selection at the handheld device.
26. The system of clause 25, wherein the defined RF profile further comprises:
   a second period of RF transmission corresponding to transmission of the acknowledge signal, where the second period of RF transmission occurs after the start of the first period and is responsive to receipt of the RF signal.
27. The system of clause 25, wherein the first period of RF transmission has a duration of 100 microseconds to 8 seconds.
28. The RF profile as set forth in clause 26, wherein the second period has a duration of 100 microseconds.
29. The system of clause 26, wherein the second period of RF transmission is followed by a distinct period of no RF transmission.
30. The system of clause 23, wherein each handheld device further includes a power source configured to provide no more than 25mA DC current.
31. The system of clause 30, wherein the power source includes at least one battery.
32. The system of clause 30, wherein the power source includes two 3.0 Volt batteries.
33. The system of clause 23, wherein the transmitter is configured to draw a DC current of less than 15mA when transmitting the RF signal and a DC current of less than 25mA when receiving the acknowledgment.
34. The system of clause 23, wherein the transmitter is configured to draw a DC current of 10.5mA when transmitting the RF signal and a DC current of 19mA when receiving the acknowledgment.
35. The system of clause 23, wherein the receiver device is configured to draw a DC current less than 25mA.
36. The system of clause 35, wherein the receiver device is adapted to draw the DC current from a power source connectable to, but external from the receiver device.
37. The system of clause 35, wherein the receiver device is configured to draw a DC current of less than 25mA when receiving the RF signal and a DC current of less than 15mA when transmitting the acknowledgment.
38. The system of clause 35, wherein the receiver device is configured to draw a DC current of 19mA when receiving the RF signal and a DC current of 10.5mA when transmitting the acknowledgment.
39. A battery-operated handheld device configured to receive a selection from a user and, responsive to the user selection, transmit an RF signal including a representation of the user selection, and receive an RF acknowledgment signal, the device comprising:
   a user interface configured to receive a user input;
   processing logic configured to identify the user input as at least one of an RF frequency selection and a user selection;
   signal generating logic configured to generate an RF signal representation of the user selection;
   an RF transceiver configured to draw less than 25mA DC current while sending and receiving RF signals; and
   a housing configured to house the processing logic, the signal generating logic, the RF transceiver, and at least one operably connected battery, wherein the housing has a length that is less than 5 times the diameter of the at least one battery, a width that is less than 3 times the diameter of the at least one battery, and a height that is less than 3 times the height of the at least one battery.
40. The device of clause 39, wherein the at least one battery is a coin cell lithium battery.
41. The device of clause 39, wherein the at least one battery has a diameter of less than 1.25 inches and a height of less than 0.25 inches.
42. The device of clause 39, wherein the at least one battery has a diameter of approximately 0.8 inches and a height of approximately 0.125 inches.
43. The device of clause 39, wherein the housing has a length of less than 5 inches, a width of less than 4 inches, and a height of less than 0.75 inches.
44. The device of clause 39, wherein the housing has a length of 3.3 inches, a width of 2.1 inches, and height of 0.3 inches.

## Claims

1. An audience response system comprising:
a base unit
a plurality of handheld devices that are like in kind and perform a same function, each handheld device including:
a handheld device transceiver,
an input selection control,
a unique address associated with a single handheld device, and
handheld device logic configured to receive a user selection from the input selection control and instruct the handheld device transceiver to transmit a wireless selection signal encoding the unique address and the user selection according to a defined wireless profile between each handheld device and the base unit;
wherein the base unit includes:
a base unit transceiver configured to receive the wireless selection signal, and
base unit logic configured to decode the wireless selection signal into the unique address and the user selection after receipt by the base unit device transceiver, generate a wireless acknowledgment signal including a representation of the unique address, and instruct the base unit transceiver to transmit the wireless acknowledgment signal according to the defined wireless profile,
wherein the defined wireless profile between each handheld device and the base unit includes:
a distinct period of no wireless transmission,
a first period of wireless transmission following the distinct period of no wireless transmission, the first period of wireless transmission including transmission of the wireless selection signal, where the first period of wireless transmission occurs upon receipt of the user selection at the input selection control, without receipt of a signal from the base unit to initiate transmission, and
a second period of wireless transmission following the first period of wireless transmission, the second period of wireless transmission including transmission of the wireless acknowledgement signal.

2. The audience response system of claim 1, wherein the first period of wireless transmission includes repeated retransmissions of the wireless selection signal.

3. The audience response system of claim 1, wherein the first period of wireless transmission includes a transmission interval separating each of the repeated retransmissions of the wireless selection signal.

4. The audience response system of claim 1, wherein the second period of wireless transmission is followed by a distinct period of no wireless transmission.

5. The audience response system of claim 1, wherein each of the plurality of handheld devices includes an output display.

6. A handheld device configured to communicate with a base unit in an audience response system having a multiplicity of handheld devices that are like in kind and perform a same function, the handheld device comprising:
a transceiver;
a user interface configured to receive a user response;
a unique address identifying the handheld device;
signal generating logic configured to generate a radio frequency signal encoding the user response and the unique address; and
transmission logic configured to instruct the transceiver to repeatedly transmit the radio frequency signal upon receipt of the user response, without receiving a signal from the base unit to initiate transmission, until a termination event occurs,
where the termination event consists of one of a receipt of an acknowledgment signal from the base unit and an expiration of a predetermined period of time.

7. The handheld device of claim 6, wherein the transmission logic is further configured to generate a transmission interval, and wherein the radio frequency signal is repeatedly transmitted according to the transmission interval.

8. The handheld device of claim 6, further comprising an output display.

9. The handheld device of claim 6, wherein the output display is a liquid crystal display.

10. The handheld device of claim 6, wherein the user interface is an alphanumeric keypad.

11. A base unit configured to communicate with a multiplicity of handheld devices in an audience response system, the base unit comprising:
a transceiver;
processing logic configured to instruct the transceiver to operate in a non-transmission mode until a response signal is wirelessly received from one of the multiplicity of handheld devices in the audience response system;
signal decoding logic configured to decode the response signal into address data that identifies one of the multiplicity of handheld devices and response data that identifies a user response,
wherein the processing logic is further configured to:
generate an acknowledgment signal including acknowledgment data and the address data,
instruct the transceiver to transmit the acknowledgment signal, and
instruct the transceiver to return to a non-transmission mode until a new response signal is wirelessly received from one of the multiplicity of handheld devices in the audience response system.

12. The base unit of claim 10, further comprising a memory configured to store the response data.

13. The base unit of claim 10, further comprising an interface for a computer.

14. The base unit of claim 10, further comprising a display.

15. The base unit of claim 10, wherein the display is a liquid crystal display.

16. The base unit of claim 10, wherein the display is at least one light emitting diode.
